# EUROPÄISCHE PATENTSCHRIFT

(11) **EP 2 505 433 B1**
(45) Veröffentlichungstag und Bekanntmachung des Hinweises auf die Patenterteilung: **13.03.2013**
(21) Anmeldenummer: 11160371.8
(22) Anmeldetag: 30.03.2011
(51) Int. Cl.: B60R 1/04, B60R 1/12, B60Q 3/02

(54) **Spiegelkopf einer Innenrückblickspiegelanordnung für Kraftfahrzeuge**
Mirror head of an interior rear view mirror assembly for motor vehicles
Tête de miroir d'un agencement de rétroviseur intérieur pour véhicules automobiles

(43) Veröffentlichungstag der Anmeldung: 03.10.2012
(73) Patentinhaber: SMR Patents S.à.r.l., 1653 Luxembourg (LU)
(72) Erfinder: Liesener, Alf, 73614, Schorndorf (DE)
(74) Vertreter: Weber-Bruls, Dorothée

(56) Entgegenhaltungen:
- EP-B1- 2 106 970
- US-A1- 2006 061 008
- US-A1- 2009 091 851

## Beschreibung

Die Erfindung betrifft einen Spiegelkopf bzw. Innenrückblickspiegel einer Innenrückblickspiegelanordnung für ein Kraftfahrzeug gemäß dem Oberbegriff des Anspruchs 1.

Eine Innenrückblickspiegelanordnung für ein Kraftfahrzeug besteht beispielsweise aus einem an einer Konsole am Dachhimmel im Kraftfahrzeuginnenraum oder an der Innenseite der Windschutzscheibe z.B. an deren oberem Rand angeordneten Spiegelfuß, welcher mittels einer ein- oder mehrteiligen Spiegelfußabdeckung verkleidet sein kann, und einem an dem Spiegelfuß gelenkig angeordneten, auch als Spiegelkopf bezeichneten Innenrückblickspiegel mit einem Spiegelglas. Der Spiegelkopf kann ein ein- oder mehrteiliges Innenrückblickspiegelgehäuse aufweisen, welches unter anderem einen dem Spiegelfuß zugeordneten Grundträger beherbergen, einen solchen umfassen, oder von einem solchen umfasst werden kann.

Die gelenkige Verbindung von Spiegelkopf und Spiegelfuß erlaubt die Vornahme einer Einstellung einer beispielsweise von Größe und Sitzposition eines Fahrers des Kraftfahrzeugs abhängigen individuellen Verstelllage des Spiegelkopfs gegenüber dem Spiegelfuß.

Die Innenrückblickspiegelanordnung kann einen mechanisch oder elektromotorisch angetriebenen Abklappmechanismus umfassen, vermittels dem der Spiegelkopf durch Betätigung einer Bedieneinrichtung, wie etwa eines Kipphebels im mechanischen Fall oder beispielsweise eines im Spiegelkopf untergebrachten berührungsempfindlichen Schalters im elektromotorisch betriebenen Fall, gegenüber dem Spiegelfuß um einen definierten Schwenkwinkel aus einer Betriebsstellung beispielsweise um eine im Wesentlichen horizontale Achse der gelenkigen Verbindung in eine Abklappstellung und umgekehrt verschwenkt werden kann, um eine Blendung durch rückwärtige Lichtquellen in der Abklappstellung abzumindern.

Das Spiegelglas besteht aus einem transparenten, klaren Glasträger, beispielsweise aus Mineralglas oder Kunststoff, z.B. aus PMMA (Polymethylmethacrylat), der auf seiner dem Fahrer abgewandten Rückseite mit einer elektromagnetische Wellen zumindest im für das menschliche Auge sichtbaren Wellenlängenbereich reflektrierenden Schicht bzw. Beschichtung versehen ist.

Das Innenrückblickspiegelgehäuse weist auf seiner der Fahrtrichtung des Kraftfahrzeugs ab- und dem Fahrer des Kraftfahrzeugs zugewandten Vorderseite eine Öffnung auf, in welcher das Spiegelglas unverstellbar gegenüber dem Innenrückblickspiegelgehäuse angeordnet ist. Das Innenrückblickspiegelgehäuse kann hierbei das Spiegelglas an dessen Rändern zumindest zum Teil derart umgreifen, dass z.B. die Einhaltung gesetzlicher Vorgaben bezüglich vorgeschriebener Mindestradien an exponierten, Personen im Kraftfahrzeuginnenraum zugänglichen Stellen sichergestellt ist. Um das Spiegelglas an dessen Rändern zu umgreifen, können die Öffnung umgebende Wandungen des Innenrückblickspiegelgehäuses mit einem umlaufenden Wulst versehen sein, welcher eine die dem Fahrer des Kraftfahrzeugs zugewandte Vorderseite des Spiegelglases einschließende, beispielsweise ebene Fläche überragt und dabei die Vorderseite des Spiegelglases von der der Fahrtrichtung des Kraftfahrzeugs zugewandten Rückseite des Spiegelglases her gesehen hintergreift. Das Spiegelglas ist dabei zumindest annähernd formschlüssig zwischen den die Öffnung umgebenden Wandungen und dem in der Draufsicht vom Fahrer aus gesehen einen Rahmen um das Spiegelglas bildenden Wulst gehalten.

Nachteilig hieran ist der hohe Herstellungsaufwand für die Montage des Spiegelkopfs, welcher hoher Herstellungsaufwand unter Anderem aus dem lage- und positionsgenauen, unbeschädigten und unverschmutzten Einbringen des Spiegelglases in die durch den umlaufenden Wulst in ihren Abmessungen kleiner als die Abmessungen der Vorderseite des Spiegelglases ausgeführte Öffnung des Innenrückblickgehäuse hervorgeht.

Durch EP 2 106 970 B1 ist ein Spiegelkopf einer Innenrückblickspiegelanordnung für ein Kraftfahrzeug bekannt. Der Spiegelkopf weist einen von einem Innenrückblickspiegelgehäuse, mindestens einer Lichtscheibe und einem Spiegelglas umschlossenen Innenraum auf, welcher zumindest ein Leuchtmittel für wenigstens eine Beleuchtungsvorrichtung beherbergt. Bei der Beleuchtungsvorrichtung kann es sich beispielsweise um eine oder mehrere Lesebeleuchtungen und/oder um zumindest einen Teil einer beispielsweise bei geöffneter Fahrzeugtür und/oder gesondert eingeschaltete Innenraumbeleuchtung handeln. Das Spiegelglas und die Lichtscheibe sind einstückig ausgebildet und grenzen zumindest entlang einer exponierten, Personen im Kraftfahrzeuginnenraum zugänglichen Kante in einem von der Vorderseite des Spiegelkopfs zu dessen Rückseite hin führenden Querschnitt gesehen L-förmig unmittelbar aneinander an. Um die Einhaltung gesetzlicher Vorgaben bezüglich vorgeschriebener Mindestradien an exponierten, Personen im Kraftfahrzeuginnenraum zugänglichen Stellen sicherzustellen, bestehen das Spiegelglas und die Lichtscheibe aus einem mit einer reflektierenden Beschichtung versehenen Glasträger aus Kunststoff mit abgerundeten Kanten. Die reflektierende Beschichtung ist dabei vorzugsweise auf die Vorder- oder Rückseite des Glasträgers aufgebracht und bedeckt dabei die vollständige in der Draufsicht vom Fahrer aus gesehen sichtbare Vorderseite. Der Spiegel kopf kann rahmenlos ausgeführt sein, wobei das Spiegelglas mit seiner Rückseite auf den dem Fahrer zugewandten Stirnseiten der die Öffnung umgebenden Wandungen des Innenrückblickspiegelgehäuses stoffschlüssig befestigt ist.

Nachteilig hieran ist, dass die reflektierende Beschichtung im Fall der Anordnung auf der Vorderseite einem unmittelbaren Kontakt beim Umgang mit dem Spiegelkopf ausgesetzt ist, beispielsweise bei der Vornahme einer Einstellung einer individuellen Verstelllage des Spiegelkopfs und des Spiegelglases z.B. abhängig von Größe und Sitzposition des Fahrers. Dadurch wird die reflektierende Beschichtung auf Dauer beschädigt. Ist die reflektierende Beschichtung auf der Rückseite aufgebracht, ist es zumindest im Bereich der Kante, entlang der das Spiegelglas und die Lichtscheibe L-förmig aneinander angrenzen, praktisch unmöglich, die vollständige in der Draufsicht vom Fahrer aus gesehen sichtbare Vorderseite mit der reflektierenden Beschichtung zu bedecken. Darüber hinaus wird die auf der Rückseite des Spiegelglases aufgebrachte reflektierende Beschichtung bei einer rahmenlosen Ausführung des Spiegelkopfs bei der Montage beschädigt, was sich wenigstens durch von der Vorderseite her durch den Glasträger hindurch sichtbare Schlieren in der reflektierenden Beschichtung zumindest innerhalb einer einen umlaufenden Rand auf der Rückseite des Spiegelglases umfassenden Partie bemerkbar macht, an welchem Rand das Spiegelglas auf den dem Fahrer zugewandten Stirnseiten der die Öffnung umgebenden Wandungen des Innenrückblickspiegelgehäuses stoffschlüssig befestigt ist, einhergehend mit einem verminderten Qualitätseindruck.

Durch US 2009/0085729 A1 ist ein Spiegelkopf einer Außenrückblickspiegelanordnung für ein Kraftfahrzeug bekannt. Der Spiegelkopf umfasst ein Außenrückblickspiegelgehäuse mit einer Öffnung auf seiner der Fahrtrichtung des Kraftfahrzeugs ab- und dem Fahrer des Kraftfahrzeugs zugewandten Vorderseite, in welcher das Spiegelglas gegenüber dem Außenrückblickspiegelgehäuse verstellbar angeordnet ist. Hierbei ist das Spiegelglas von die Öffnung umgebenden Wandungen des Außenrückblickspiegelgehäuses beabstandet angeordnet. Der Spiegelkopf ist mit einer hinter dem Spiegelglas vorgesehenen und in ihrem Betrieb von der dem Fahrer zugewandten Vorderseite des Spiegelglases her sichtbaren Warnanzeige versehen. Befindet sich die Warnanzeige außer Betrieb ist weder die Warnanzeige, noch eine Unregelmäßigkeit im Spiegelglas zu erkennen. Hierzu besteht die auf der dem Fahrer des Kraftfahrzeugs abgewandten Rückseite des Glasträgers des Spiegelglases aufgebrachte reflektierende Beschichtung aus einer halbdurchsichtigen bzw. teildurchlässigen reflektierenden Folie oder aus einer dielektrischen Mehrschicht- bzw. Verbundfolie. Ein dunkles Farbmaskenelement ist unter Aussparung einer Partie der reflektierenden Beschichtung auf der Rückseite des Spiegelglases aufgebracht. Die ausgesparte Partie ist der Warnanzeige zugeordnet. Auf der Rückseite des Glasträgers steht eine zylindrische, lichtführende Röhre mit dunklen Innenwandungen und mit der ausgesparten Partie als Grundfläche auf. Darin ist zwischen einer Lichtquelle und der Rückseite des Glasträgers wenigstens eine Anzeigeblende beherbergt, welche bei eingeschaltetem Leuchtmittel die Warnanzeige als durchscheinendes Muster von hinten durch das Spiegelglas projiziert.

Eine Aufgabe der Erfindung ist die Entwicklung eines Spiegelkopfs einer Innenrückblickspiegelanordnung für ein Kraftfahrzeug, der einen verbesserten Schutz der reflektierenden Beschichtung vor Beschädigung einhergehend mit einem höheren Qualitätseindruck und einem verringerten Herstellungsaufwand aufweist.

Die Aufgabe wird gelöst mit den Merkmalen des unabhängigen Anspruchs.

Demnach ist ein Spiegelkopf bzw. Innenrückblickspiegel einer Innenrückblickspiegelanordnung für ein Kraftfahrzeug vorgesehen, welcher Spiegelkopf einen wenigstens von einem Spiegelglas und einem Innenrückblickspiegelgehäuse umschlossenen Innenraum aufweist.

Das Innenrückblickspiegelgehäuse weist wenigstens eine Öffnung auf, welche zumindest einen Teil der einem Fahrer des Kraftfahrzeugs zu- und der Fahrtrichtung des Kraftfahrzeugs abgewandten Vorderseite des Spiegelkopfs einnimmt.

Wenigstens ein der Vorderseite des Spiegelkopfs zugewandter Teil der Öffnung ist durch das Spiegelglas verschlossen.

Das Spiegelglas besteht aus einem transparenten, klaren Glasträger, beispielsweise aus einem Mineralglas oder einem Kunststoff, wie etwa PMMA, welcher auf seiner dem Innenraum des Spiegelkopfs zu- und der Vorderseite des Spiegelkopfs abgewandten Rückseite mit einer reflektierenden Beschichtung versehen ist.

Das Spiegelglas ist mindestens auf seiner Rückseite entlang wenigstens eines Rands mit zumindest einer die Öffnung umgebenden Wandung des Innenrückblickspiegelgehäuses zumindest stoffschlüssig verbunden.

Das Spiegelglas und das Innenrückblickspiegelgehäuse sind demnach mindestens im Bereich des wenigstens einen Rands der Rückseite des Spiegelglases zumindest stoffschlüssig miteinander verbunden.

Zumindest eine wenigstens den zur stoffschlüssigen Verbindung mit wenigstens einer Wandung des Innenrückblickspiegelgehäuses vorgesehenen Rand umfassende erste Partie der Rückseite des Glasträgers ist frei von der reflektierenden Beschichtung.

Demnach kann eine Freilassung des zumindest einen zur stoffschlüssigen Verbindung mit wenigstens einer Wandung des Innenrückblickspiegelgehäuses vorgesehenen Rands der Rückseite des Glasträgers von der reflektierenden Beschichtung vorgesehen sein.

Dabei ist denkbar, dass im Bereich des zumindest einen zur stoffschlüssigen Verbindung mit wenigstens einer Wandung des Innenrückblickspiegelgehäuses vorgesehenen Rands wiederum von der Rückseite des Spiegelglases her die auf der Rückseite des Glasträgers aufgebrachte opake Beschichtung von der reflektierenden Beschichtung überdeckt ist, so dass diese durch die opake Beschichtung im Bereich des Rands von der Vorderseite des Spiegelglases aus gesehen durch den Glasträger hindurch nicht sichtbar ist.

Darüber hinaus ist zumindest auf der Rückseite des Glasträgers eine opake Beschichtung aufgebracht.

Die opake Beschichtung bedeckt zumindest eine wenigstens den zur stoffschlüssigen Verbindung mit wenigstens einer Wandung des Innenrückblickspiegelgehäuses vorgesehenen Rand auf der Rückseite umfassende zweite Partie des Glasträgers.

Demnach ist mindestens eine wenigstens den zur stoffschlüssigen Verbindung mit zumindest einer Wandung des Innenrückblickspiegelgehäuses vorgesehenen Rand auf der Rückseite umfassende zweite Partie des Glasträgers mit einer opaken Beschichtung versehen.

Die stoffschlüssige Verbindung des Spiegelglases mit dem Innenrückblickspiegelgehäuse besteht über die opake Beschichtung des Glasträgers hinweg.

Die stoffschlüssige Verbindung des wenigstens einen Rands auf der Rückseite des Spiegelglases mit dem Innenrückblickspiegelgehäuse besteht dabei zwischen der opaken Beschichtung auf der Rückseite des Glasträgers des Spiegelglases und zumindest einer die Öffnung umgebenden Wandung des Innenrückblickspiegelgehäuses.

Die opake Beschichtung kaschiert von der Vorderseite des Glasträgers des Spiegelglases her gesehen bzw. in der Draufsicht vom Fahrer aus durch den Glasträger des Spiegelglases hindurch gesehen zumindest die stoffschlüssige Verbindung.

Die erste und die zweite Partie können identisch sein.

Die zweite Partie kann zumindest einen Teil der mit der reflektierenden Beschichtung versehenen Rückseite des Glasträgers umfassen. Dabei überdeckt die opake Beschichtung zusätzlich einen Teil der auf der Rückseite des Glasträgers aufgebrachten reflektierenden Beschichtung, so dass die reflektierende Beschichtung im Bereich der zweiten Partie zwischen dem Glasträger und der opaken Beschichtung eingeschlossen ist.

Die zweite Partie kann die gesamte Rückseite des Glasträgers umfassen. Dabei überdeckt die opake Beschichtung zusätzlich zu dem Rand die auf der Rückseite des Glasträgers aufgebrachte reflektierende Beschichtung, so dass die reflektierende Beschichtung zwischen dem Glasträger und der opaken Beschichtung eingeschlossen ist.

Die zweite Partie kann zusätzlich wenigstens eine an die Rückseite angrenzende und diese mit einer dem Fahrer zugewandten Vorderseite verbindende Schmalseite des Glasträgers umfassen. Dabei überdeckt die opake Beschichtung zusätzlich zu dem Rand wenigstens eine an die Rückseite angrenzende und diese mit einer dem Fahrer zugewandten Vorderseite verbindende Schmalseite des Glasträgers.

Der Spiegelkopf kann rahmenlos ausgeführt sein. Dabei ist das Spiegelglas mindestens mit einem zur stoffschlüssigen Verbindung mit zumindest einer Wandung des Innenrückblickspiegelgehäuses vorgesehenen Rand auf seiner Rückseite auf wenigstens einer dem Fahrer des Kraftfahrzeugs zugewandten Stirnseite zumindest einer die Öffnung umgebenden Wandung des Innenrückblickspiegelgehäuses stoffschlüssig befestigt. Hierbei liegt mindestens eine an die Rückseite angrenzende und diese mit einer dem Fahrer zugewandten Vorderseite verbindende Schmalseite des Spiegelglases frei.

Alternativ kann der Spiegelkopf mit einem Rahmen ausgeführt sein. Dabei ist das Spiegelglas mindestens mit einem zur stoffschlüssigen Verbindung mit zumindest einer Wandung des Innenrückblickspiegelgehäuses vorgesehenen Rand auf seiner Rückseite auf wenigstens einem dem Fahrer des Kraftfahrzeugs zugewandten Absatz zumindest einer die Öffnung umgebenden Wandung des Innenrückblickspiegelgehäuses stoffschlüssig befestigt. Hierbei überdeckt mindestens ein den wenigstens einen Absatz überragender Teil der zumindest einen Wandung wenigstens zumindest eine an die Rückseite angrenzende und diese mit einer dem Fahrer zugewandten Vorderseite verbindende Schmalseite des Spiegelglases.

Dabei kann zusätzlich der mindestens eine den wenigstens einen Absatz überragende Teil der zumindest einen Wandung stoffschlüssig zumindest mit mindestens einer an die Rückseite angrenzenden und diese mit der dem Fahrer zugewandten Vorderseite verbindende Schmalseite des Spiegelglases verbunden sein.

Die opake Beschichtung kann zumindest in der Draufsicht vom Fahrer aus durch den Glasträger des Spiegelglases hindurch gesehen einen schwarzen Farbeindruck aufweisen bzw. schwarz sein.

Die stoffschlüssige Verbindung kann als eine Klebeverbindung und/oder als eine beispielsweise durch Reibschweißen oder Laserschweißen hergestellte Schweißverbindung ausgeführt sein.

Auf der Rückseite des Glasträgers kann wenigstens eine beispielsweise einem Sensor und/oder einer Lichtquelle und/oder einer Anzeigevorrichtung zugeordnete Freistelle vorgesehen sein, welche zumindest frei von der opaken Beschichtung ausgeführt ist. Besonders bevorzugt ist die Freistelle darüber hinaus frei von der reflektierenden Beschichtung.

Der Glasträger des Spiegelglases kann aus einem transparenten, klaren Mineralglas oder aus einem transparenten, klaren Kunststoff, wie etwa PMMA, bestehen.

Das Spiegelglas kann als ein Keilglas und/oder als ein elektrochromatisch abblendbares Spiegelglas ausgeführt sein.

In dem Spiegelkopf kann eine zumindest teilweise Unterbringung einer oder mehrerer elektrischer Komponenten beispielsweise durch eine zumindest teilweise Beherbergung einer oder mehrerer elektrischer Komponenten durch das Innenrückblickspiegelgehäuse vorgesehen sein.

Beispiele für allein oder in Kombination miteinander zumindest zum Teil im Spiegelkopf untergebrachte elektrische Komponenten sind:
- ein elektrochromatisch abblendbares Spiegelglas,
- wenigstens ein Leuchtmittel einer ambienten, bei Dunkelheit während der Fahrt beispielsweise ständig eingeschalteten Innenraumbeleuchtung,
- wenigstens ein Leuchtmittel einer bei geöffneter Fahrzeugtür oder andersartig, z.B. gesondert eingeschalteten Innenraumbeleuchtung,
- wenigstens ein Leuchtmittel einer Lesebeleuchtung,
- zumindest ein Temperatur- und/oder Feuchtigkeitssensor zur Regelung der Klimatisierung der Kraftfahrzeuginnenraums, z.B. zur Regelung beispielsweise eines Abtauvorgangs der Windschutzscheibe,
- eine Mikrofonanordnung z.B. für eine Sprachsteuerung und/oder eines im Kraftfahrzeuginnenraum integrierten Telefonsystems und/oder z.B. für eine Raumkorrektur einer Kraftfahrzeuginnenraumbeschallung,
- eine Lautsprecheranordnung z.B. ebenfalls eines Telefonsystems und/oder einer Kraftfahrzeuginnenraumbeschallung,
- eine z.B. wie in US 2009/0085729 A1 beschrieben in das Spiegelglas integrierte Anzeigevorrichtung, wie etwa eine Kompassanzeige,
- mindestens ein Schalter und/oder Taster zur Betätigung zumindest einer der genannten elektrischen Komponenten, z.B. einer Ab- und Aufblendung des elektrochromatisch abblendbaren Spiegelglases, eines Ein- und Ausschaltens der Lesebeleuchtung, etc.

Vorteile gegenüber dem Stand der Technik ergeben sich unter Anderem dadurch, dass die Erfindung unter Anderem die Herstellung eines rahmenlosen Spiegelkopfs für eine Innenrückblickspiegelanordnung eines Kraftfahrzeugs mit hohem Qualitätseindruck erlaubt, ohne dass hierbei die reflektierende Beschichtung beim Umgang mit dem Spiegel kopf der Gefahr einer Beschädigung ausgesetzt ist. Darüber hinaus ist der Spiegelkopf im Vergleich zu einem Spiegelkopf mit einem das Spiegelglas im Wesentlichen formschlüssig umgreifenden Wulst einfacher und damit kostengünstiger zu montieren.

Weitere Merkmale und Vorteile der Erfindung ergeben sich aus den Ansprüchen, der Beschreibung und den Zeichnungen.

Ausführungsbeispiele der Erfindung sind nachfolgend anhand der Zeichnung näher erläutert. Darin bezeichnen gleiche Bezugszeichen gleiche oder gleich wirkende Elemente. Der Übersicht halber können nur Bezugszeichen in den einzelnen Zeichnungen dargestellt sein, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: ein Spiegelkopf einer Innenrückblickspiegelanordnung für ein Kraftfahrzeug von dessen einem Fahrer eines Kraftfahrzeugs zugewandter Vorderseite aus gesehen.
- Fig. 2: ein Innenrückblickspiegelgehäuse eines Spiegelkopfs einer Innenrückblickspiegelanordnung für ein Kraftfahrzeug in einem Querschnitt.
- Fig. 3: ein erstes Ausführungsbeispiel eines Spiegelglases eines Spiegelkopfs einer Innenrückblickspiegelanordnung für ein Kraftfahrzeug in einem Querschnitt.
- Fig. 4: ein erstes Ausführungsbeispiel eines Details eines Spiegelkopfs einer Innenrückblickspiegelanordnung für ein Kraftfahrzeug in einem Querschnitt durch das Innenrückblickspiegelgehäuse und ein Spiegelglas gemäß einem zweiten Ausführungsbeispiel hindurch.
- Fig. 5: ein zweites Ausführungsbeispiel eines Details eines Spiegelkopfs einer Innenrückblickspiegelanordnung für ein Kraftfahrzeug in einem Querschnitt durch das Innenrückblickspiegelgehäuse und ein Spiegelglas gemäß einem dritten Ausführungsbeispiel hindurch.

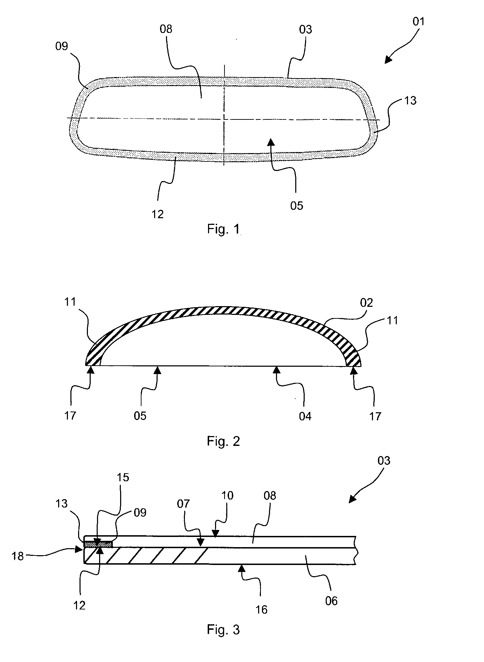

Ein in den Fig. 1 bis Fig. 5 ganz oder in Teilen dargestellter Spiegelkopf 01 einer Innenrückblickspiegelanordnung für ein Kraftfahrzeug besteht im Wesentlichen aus einem Innenrückblickspiegelgehäuse 02 und einem Spiegelglas 03. Das Innenrückblickspiegelgehäuse weist wenigstens eine Öffnung 04 auf (Fig. 2), welche zumindest einen Teil der einem Fahrer des Kraftfahrzeugs zugewandten Vorderseite 05 des Spiegelkopfs 01 einnimmt. Zumindest ein der Vorderseite 05 des Spiegelkopfs 01 zugewandter Teil der wenigstens einen Öffnung 04 ist durch das Spiegelglas 03 verschlossen.

Das Spiegelglas 03 besteht aus einem beispielsweise aus einem Mineralglas oder einem Kunststoff, wie etwa PMMA, hergestellten, transparenten, klaren Glasträger 06.

Der Glasträger 06 ist auf seiner in zusammengebautem Zustand des Spiegelkopfs 01 der Vorderseite 05 des Spiegelkopfs 01 abgewandten Rückseite 07 mit einer reflektierenden Beschichtung 08 versehen.

Das Spiegelglas 03 ist mindestens entlang wenigstens eines Rands 09 auf seiner Rückseite 10 mit zumindest einer die Öffnung 04 umgebenden Wandung 11 des Innenrückblickspiegelgehäuses 02 wenigstens stoffschlüssig verbunden.

Dabei ist zumindest eine wenigstens den zur stoffschlüssigen Verbindung mit wenigstens einer Wandung 11 des Innenrückblickspiegelgehäuses 02 vorgesehenen Rand 09 umfassende erste Partie 12 der Rückseite 07 des Glasträgers 06 frei von der reflektierenden Beschichtung 08.

Darüber hinaus ist zumindest auf der Rückseite 07 des Glasträgers 06 eine opake Beschichtung 13 aufgebracht. Die opake Beschichtung 13 bedeckt zumindest eine wenigstens den zur stoffschlüssigen Verbindung mit wenigstens einer Wandung 11 des Innenrückblickspiegelgehäuses 02 vorgesehenen Rand 09 auf der Rückseite 07 umfassende zweite Partie 15 des Glasträgers 06.

Die stoffschlüssige Verbindung 14 des Spiegelglases 03 mit dem Innenrückblickspiegelgehäuse 02 besteht über die opake Beschichtung 13 des Glasträgers 06 hinweg. Die opake Beschichtung 13 kaschiert vom Fahrer aus durch den Glasträger 06 des Spiegelglases 03 hindurch gesehen zumindest die stoffschlüssige Verbindung 14.

Wie in Fig. 3 dargestellt können die erste Partie 12 und die zweite Partie 15 identisch sein.

Wie in Fig. 3 außerdem dargestellt, kann im Bereich des zumindest einen zur stoffschlüssigen Verbindung mit wenigstens einer Wandung 11 des Innenrückblickspiegelgehäuses 02 vorgesehenen Rands 09 von der Rückseite 10 des Spiegelglases 03 her die auf der Rückseite 07 des Glasträgers 06 aufgebrachte opake Beschichtung 13 von der reflektierenden Beschichtung 08 überdeckt sein, so dass die reflektierende Beschichtung 08 von der Vorderseite 16 des Spiegelglases 03 durch den Glasträger 06 hindurch gesehen im Bereich des Rands 09 durch die dort auf der Rückseite 07 des Glasträgers 06 zwischen reflektierender Beschichtung 08 und Glasträger 06 aufgebrachte opake Beschichtung 13 nicht sichtbar ist.

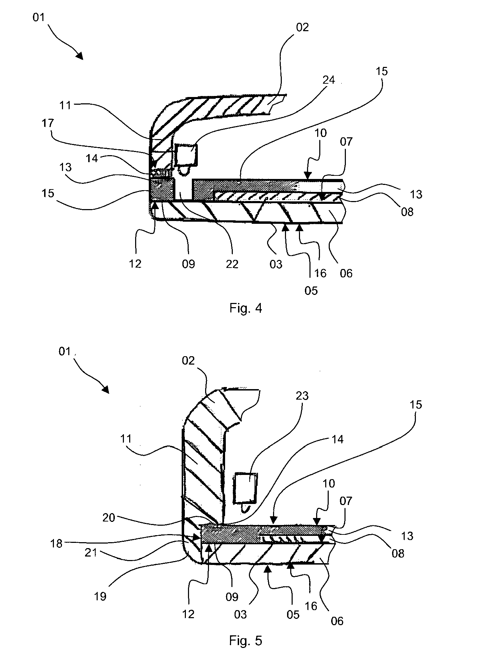

Wie in Fig. 4 und in Fig. 5 dargestellt kann die mit der opaken Beschichtung 13 versehene zweite Partie 15 alternativ oder zusätzlich zumindest einen Teil der mit der reflektierenden Beschichtung 08 versehenen Rückseite 07 des Glasträgers 06 bzw. Rückseite 10 des Spiegelglases 03 umfassen, wobei die opake Beschichtung 13 einen Teil der auf der Rückseite 07 des Glasträgers 06 aufgebrachten reflektierenden Beschichtung 08 überdeckt, so dass die reflektierende Beschichtung 08 im Bereich der zweiten Partie 15 zwischen dem Glasträger 06 und der opaken Beschichtung 13 eingeschlossen ist.

Die zweite Partie kann dabei wie in Fig. 5 dargestellt die gesamte Rückseite 07 des Glasträgers 06 bzw. die gesamte Rückseite 10 des Spiegelglases 03 umfassen, wobei die opake Beschichtung 13 die auf der Rückseite 07 des Glasträgers 06 aufgebrachte reflektierende Beschichtung 08 überdeckt, so dass die reflektierende Beschichtung 08 zwischen dem Glasträger 06 und der opaken Beschichtung 13 eingeschlossen ist.

Der Spiegelkopf 01 kann wie in Fig. 4 dargestellt rahmenlos ausgeführt sein. Hierbei ist das Spiegelglas 03 mit dem mindestens einen Rand 09 seiner Rückseite 10 auf wenigstens einer dem Fahrer zugewandten Stirnseite 17 zumindest einer die Öffnung 04 umgebenden Wandung 11 des Innenrückblickspiegelgehäuses 02 stoffschlüssig befestigt. Dabei liegt mindestens eine an die Rückseite 10 angrenzende und diese mit einer dem Fahrer zugewandten Vorderseite 16 verbindende Schmalseite 18 des Spiegelglases 03 frei.

Der Spiegelkopf 01 kann außerdem wie in Fig. 5 dargestellt mit einem Rahmen 19 ausgeführt sein. Hierbei ist das Spiegelglas 03 zumindest mit dem mindestens einen Rand 09 seiner Rückseite 10 auf wenigstens einem dem Fahrer zugewandten Absatz 20 zumindest einer die Öffnung 04 umgebenden Wandung 11 des Innenrückblickspiegelgehäuses 02 stoffschlüssig befestigt. Mindestens ein den wenigstens einen Absatz 20 überragender Teil 21 der Wandung 11 überdeckt dabei zumindest wenigstens eine an die Rückseite 10 angrenzende und diese mit einer dem Fahrer zugewandten Vorderseite 16 verbindende Schmalseite 18 des Spiegelglases 03.

Dabei kann der mindestens eine den wenigstens einen Absatz 20 überragende Teil 21 der zumindest einen Wandung 11 stoffschlüssig wenigstens mit mindestens einer an die Rückseite 10 angrenzenden und diese mit der dem Fahrer zugewandten Vorderseite 16 verbindende Schmalseite 18 des Spiegelglases 03 verbunden sein.

Wichtig ist hervorzuheben, dass der Spiegelkopf 01 wenigstens eine frei von der opaken Beschichtung 13 auf der Rückseite 07 des Glasträgers 06 ausgeführte Freistelle 22 aufweisen kann. Die Freistelle 22 kann zusätzlich frei von der reflektierenden Beschichtung 08 sein. Die Freistelle 22 kann einem oder mehreren hinter dem Spiegelglas beherbergten Sensoren 23 und/oder Leuchtmitteln 24 zugeordnet sein.

Die Erfindung ist insbesondere im Bereich der Herstellung von Innenrückblickspiegelanordnungen für Kraftfahrzeuge gewerblich anwendbar.

### Bezugszeichenliste

- 01: Spiegelkopf
- 02: Innenrückblickspiegelgehäuse
- 03: Spiegelglas
- 04: Öffnung
- 05: Vorderseite des Spiegelkopfs
- 06: Glasträger
- 07: Rückseite des Glasträgers
- 08: reflektierende Beschichtung
- 09: Rand
- 10: Rückseite des Spiegelglases
- 11: Wandung
- 12: erste Partie
- 13: opake Beschichtung
- 14: stoffschlüssige Verbindung
- 15: zweite Partie
- 16: Vorderseite des Spiegelglases
- 17: Stirnseite
- 18: Schmalseite
- 19: Rahmen
- 20: Absatz
- 21: Teil einer Wandung
- 22: Freistelle
- 23: Sensor
- 24: Leuchtmittel

## Patentansprüche

1. Spiegelkopf (01) einer Innenrückblickspiegelanordnung für ein Kraftfahrzeug, mit einem Innenrückblickspiegelgehäuse (02) mit wenigstens einer Öffnung (04), welche zumindest einen Teil der einem Fahrer des Kraftfahrzeugs zugewandten Vorderseite (05) des Spiegelkopfs (01) einnimmt, und mit einem wenigstens einen der Vorderseite (05) des Spiegelkopfs zugewandten Teil der Öffnung (04) verschließenden Spiegelglas (03) aus einem transparenten, klaren Glasträger (06), welcher auf seiner der Vorderseite (05) des Spiegelkopfs (01) abgewandten Rückseite (07) mit einer reflektierenden Beschichtung (08) versehen ist, wobei das Spiegelglas (03) mindestens entlang wenigstens eines Rands (09) auf seiner Rückseite (10) mit zumindest einer die Öffnung (04) umgebenden Wandung (11) des Innenrückblickspiegelgehäuses (02) wenigstens stoffschlüssig verbunden ist,
**dadurch gekennzeichnet,**
**dass** zumindest eine wenigstens den zur stoffschlüssigen Verbindung (14) mit wenigstens einer Wandung (11) des Innenrückblickspiegelgehäuses (02) vorgesehenen Rand (09) umfassende erste Partie (12) der Rückseite (07) des Glasträgers (06) frei von der reflektierenden Beschichtung (08) ist und zumindest auf der Rückseite (07) des Glasträgers (06) eine opake Beschichtung (13) aufgebracht ist, welche zumindest eine wenigstens den zur stoffschlüssigen Verbindung mit wenigstens einer Wandung (11) des Innenrückblickspiegelgehäuses (02) vorgesehenen Rand (09) auf der Rückseite (07) umfassende zweite Partie (15) des Glasträgers (06) bedeckt, wobei die stoffschlüssige Verbindung (14) des Spiegelglases (03) mit dem Innenrückblickspiegelgehäuse (02) über die opake Beschichtung (13) des Glasträgers (06) hinweg besteht und die opake Beschichtung (13) vom Fahrer aus durch den Glasträger (06) des Spiegelglases (03) hindurch gesehen zumindest die stoffschlüssige Verbindung (14) kaschiert.

2. Spiegelkopf nach Anspruch 1,
**dadurch gekennzeichnet,**
**dass** die erste Partie (12) und die zweite Partie (15) identisch sind.

3. Spiegelkopf nach Anspruch 1,
**dadurch gekennzeichnet,**
**dass** die zweite Partie (15) zumindest einen Teil der mit der reflektierenden Beschichtung (08) versehenen Rückseite (10) des Spiegelglases (03) umfasst, wobei die opake Beschichtung (13) einen Teil der auf der Rückseite (07) des Glasträgers (06) aufgebrachten reflektierenden Beschichtung (08) überdeckt, so dass die reflektierende Beschichtung (08) im Bereich der zweiten Partie (15) zwischen dem Glasträger (06) und der opaken Beschichtung (13) angeordnet ist.

4. Spiegelkopf nach Anspruch 1 oder 3,
**dadurch gekennzeichnet,**
**dass** die zweite Partie (15) die gesamte Rückseite (10) des Spiegelglases (03) umfasst, wobei die opake Beschichtung (139 die auf der Rückseite (07) des Glasträgers (06) aufgebrachte reflektierende Beschichtung (08) überdeckt, so dass die reflektierende Beschichtung (08) zwischen dem Glasträger (06) und der opaken Beschichtung (13) eingeschlossen ist.

5. Spiegelkopf nach einem der Ansprüche 2, 3 oder 4,
**dadurch gekennzeichnet,**
**dass** die zweite Partie (15) wenigstens eine an die Rückseite (10) angrenzende und diese mit einer dem Fahrer zugewandten Vorderseite (16) verbindende Schmalseite (18) des Spiegelglases (03) umfasst, wobei die opake Beschichtung (13) wenigstens eine an die Rückseite (10) angrenzende und diese mit einer dem Fahrer zugewandten Vorderseite (16) verbindende Schmalseite (18) des Spiegelglases (03) überdeckt.

6. Spiegelkopf nach einem der vorhergehenden Ansprüche,
**dadurch gekennzeichnet,**
**dass** der Spiegelkopf (01) rahmenlos ausgeführt ist, wobei das Spiegelglas (03) mit dem mindestens einen Rand (09) auf wenigstens einer dem Fahrer zugewandten Stirnseite (17) zumindest einer die Öffnung (04) umgebenden Wandung (11) des Innenrückblickspiegelgehäuses (02) stoffschlüssig befestigt ist und mindestens eine an die Rückseite (10) angrenzende und diese mit einer dem Fahrer zugewandten Vorderseite (16) verbindende Schmalseite (18) des Spiegelglases (03) frei liegt.

7. Spiegelkopf nach einem der Ansprüche 1 bis 5,
**dadurch gekennzeichnet,**
**dass** der Spiegelkopf (01) mit einem Rahmen (19) ausgeführt ist, wobei das Spiegelglas (03) zumindest mit dem mindestens einen Rand (09) auf wenigstens einem dem Fahrer zugewandten Absatz (20) zumindest einer die Öffnung (04) umgebenden Wandung (11) des Innenrückblickspiegelgehäuses (02) stoffschlüssig befestigt ist und mindestens ein den wenigstens einen Absatz (20) überragender Teil (21) der Wandung (11) zumindest wenigstens eine an die Rückseite (10) angrenzende und diese mit einer dem Fahrer zugewandten Vorderseite (16) verbindende Schmalseite (18) des Spiegelglases (03) überdeckt.

8. Spiegelkopf nach Anspruch 7,
**dadurch gekennzeichnet,**
**dass** der mindestens eine den wenigstens einen Absatz überragende Teil der zumindest einen Wandung stoffschlüssig wenigstens mit mindestens einer an die Rückseite angrenzenden und diese mit der dem Fahrer zugewandten Vorderseite verbindende Schmalseite des Spiegelglases verbunden ist.

9. Spiegelkopf nach einem der vorhergehenden Ansprüche,
**dadurch gekennzeichnet,**
**dass** die opake Beschichtung (13) zumindest durch den Glasträger (06) des Spiegelglases (03) hindurch gesehen einen schwarzen Farbeindruck aufweist.

10. Spiegelkopf nach einem der vorhergehenden Ansprüche,
**dadurch gekennzeichnet,**
**dass** die stoffschlüssige Verbindung (14) eine Klebeverbindung und/oder eine Schweißverbindung umfasst.

11. Spiegelkopf nach einem der vorhergehenden Ansprüche,
**gekennzeichnet durch**
wenigstens eine auf der Rückseite (07) des Glasträgers (06) frei von der opaken Beschichtung (13) ausgeführte Freistelle (22).

12. Spiegelkopf nach Anspruch 11,
**gekennzeichnet durch**
wenigstens eine Freistelle (22), die zusätzlich frei von der reflektierenden Beschichtung (08) ist.

13. Spiegelkopf nach einem der vorhergehenden Ansprüche,
**dadurch gekennzeichnet,**
**dass** der Glasträger (06) des Spiegelglases (03) aus einem transparenten, klaren Mineralglas besteht.

14. Spiegelkopf einem der Ansprüche 1 bis 12,
**dadurch gekennzeichnet**
**dass** der Glasträger (06) des Spiegelglases (03) aus einem transparenten, klaren Kunststoff besteht.

15. Spiegelkopf nach einem der vorhergehenden Ansprüche,
**dadurch gekennzeichnet,**
**dass** das Spiegelglas (03) als ein Keilglas und/oder als ein elektrochromatisch abblendbares Spiegelglas ausgeführt ist.

## Claims

1. A mirror head (01) of an interior rear view mirror assembly for a motor vehicle, with an interior rear view mirror housing (02) with at least one opening (04), said opening (04) occupying at least a part of the front (05) of the mirror head (01) and said front (05) facing a driver of the motor vehicle, and with a mirror glass (03) made of a transparent, clear glass carrier (06), said glass carrier (06) having a reflective coating (08) on its back (07), said back (07) facing away from the front (05) of the mirror head (01), said mirror glass (03) closing at least one part of the opening (04), said part of the opening (04) facing the front (05) of the mirror head, wherein the mirror glass (03) is at least firmly bonded, at least along at least one edge (09) on its back (10), to at least one wall (11) of the interior rear view mirror housing (02), said wall (11) surrounding the opening (04),
**characterized in**
**that** at least one first part (12) of the back (07) of the glass carrier (06) is free from the reflective coating (08), said first part (12) comprising at least the edge (09) provided for the firm bond (14) with at least one wall (11) of the interior rear view mirror housing (02), and that an opaque coating (13) is deposited at least on the back (07) of the glass carrier (06), said opaque coating (13) covering at least one second part (15) of the glass carrier (06), said second part (15) comprising at least the edge (09) on the back (07), said edge (09) being provided for the firm bond with at least one wall (11) of the interior rear view mirror housing (02), wherein the firm bond (14) between the mirror glass (03) and the interior rear view mirror housing (02) exists across the opaque coating (13) of the glass carrier (06) and the opaque coating (13) conceals, as viewed from the driver through the glass carrier (06) of the mirror glass (03), at least the firm bond (14).

2. The mirror head according to claim 1,
**characterized in**
**that** the first part (12) and the second part (15) are identical to each other.

3. The mirror head according to claim 1,
**characterized in**
**that** the second part (15) comprises at least a part of the back (10) of the mirror glass (03), said back (10) being provided with the reflective coating (08), wherein the opaque coating (13) covers a part of the reflective coating (08) that is deposited on the back (07) of the glass carrier (06) so that the reflective coating (08) is arranged in the region of the second part (15) between the glass carrier (06) and the opaque coating (13).

4. The mirror head according to claim 1 or 3,
**characterized in**
**that** the second part (15) comprises the whole back (10) of the mirror glass (03), wherein the opaque coating (13) covers the reflective coating (08) that is deposited on the back (07) of the glass carrier (06) so that the reflective coating (08) is enclosed between the glass carrier (06) and the opaque coating (13).

5. The mirror head according to any one of claims 2, 3 or 4,
**characterized in**
**that** the second part (15) comprises at least one narrow side (18) of the mirror glass (03), said narrow side (18) being adjacent to the back (10) and connecting the back (10) to a front (16) that faces the driver, wherein the opaque coating (13) covers at least one narrow side (18) of the mirror glass (03), said narrow side (18) being adjacent to the back (10) and connecting the back (10) to a front (16) that faces the driver.

6. The mirror head according to any one of the preceding claims,
**characterized in**
**that** the mirror head (01) has no frame, wherein the mirror glass (03) is attached, at the at least one edge (09), to at least one face (17) of at least one wall (11) of the interior rear view mirror housing (02) by means of a firm bond, said face (17) facing the driver and said wall (11) surrounding the opening (04), and at least one narrow side (18) of the mirror glass (03) is bare, said narrow side (18) being adjacent to the back (10) and connecting the back (10) to a front (16) that faces the driver.

7. The mirror head according to any one of claims 1 to 5,
**characterized in**
**that** the mirror head (01) has a frame (19), wherein the mirror glass (03) is attached, at least at the at least one edge (09), to at least one shoulder (20) of at least one wall (11) of the interior rear view mirror housing (02) by means of a firm bond, said shoulder (20) facing the driver and said wall (11) surrounding the opening (04), and at least one part (21) of the wall (11) at least covers at least one narrow side (18) of the mirror glass (03), said part (21) rising above the least one shoulder (20) and said narrow side (18) being adjacent to the back (10) and connecting the back (10) to a front (16) that faces the driver.

8. The mirror head according to claim 7,
**characterized in**
**that** said at least one part of the at least one wall is firmly bonded at least to at least one narrow side of the mirror glass, said at least one part of the at least one wall rising above the least one shoulder and said narrow side being adjacent to the back and connecting the back to the front that faces the driver.

9. The mirror head according to any one of the preceding claims,
**characterized in**
**that** the perceived color of the opaque coating (13) is black, at least as viewed through the glass carrier (06) of the mirror glass (03).

10. The mirror head according to any one of the preceding claims,
**characterized in**
**that** the firm bond (14) comprises an adhesive joint and/or a welded joint.

11. The mirror head according to any one of the preceding claims,
**characterized by**
at least one bare spot (22) on the back (07) of the glass carrier (06), said bare spot (22) being free from the opaque coating (13).

12. The mirror head according to claim 11,
**characterized by**
at least one bare spot (22) that in addition is free from the reflective coating (08).

13. The mirror head according to any one of the preceding claims,
**characterized in**
**that** the glass carrier (06) of the mirror glass (03) consists of a transparent, clear natural glass.

14. The mirror head according to any one of claims 1 to 12,
**characterized in**
**that** the glass carrier (06) of the mirror glass (03) consists of a transparent, clear synthetic material.

15. The mirror head according to any one of the preceding claims,
**characterized in**
**that** the mirror glass (03) is a wedge glass and/or an electrochromatically dimmable mirror glass.

## Revendications

1. Tête de rétroviseur (01) d'un agencement de rétroviseur intérieur destiné à un véhicule à moteur, ayant un boîtier de rétroviseur intérieur (02) muni d'au moins une ouverture (04), qui reçoit au moins une partie du côté avant (05) de la tête de rétroviseur (01) faisant face au conducteur du véhicule à moteur, et au moins un verre de rétroviseur (03), fermant au moins une partie de l'ouverture (04) faisant face au côté avant (05) de la tête de rétroviseur, constitué d'un substrat de verre transparent et clair (06), qui est muni au niveau de son côté arrière (07) à l'opposé du côté avant (05) de la tête de rétroviseur (01) d'un revêtement réflecteur (08), de telle sorte que le verre de rétroviseur (03), au moins le long d'au moins un bord (09) sur son côté arrière (10), est relié à au moins une paroi (11) délimitant l'ouverture (04) du boîtier de rétroviseur intérieur (02), au moins par liaison de matériaux,
**caractérisée en ce que**
au moins une première partie (12) du côté arrière (07) du substrat de verre (06), comprenant un bord (09) prévu pour une liaison de matériaux (14) avec au moins une paroi (11) du boîtier de rétroviseur extérieur (02), est exempte du revêtement réflecteur (08), et au moins un revêtement opaque (13) est appliqué sur le côté arrière (07) du substrat de verre (06), qui recouvre au moins une deuxième partie (15) du substrat de verre (06) comprenant au moins un bord (09) prévu pour une liaison de matériaux avec au moins une paroi (11) du boîtier de rétroviseur extérieur (02) sur le côté arrière, de sorte que la liaison de matériaux (14) du verre de rétroviseur (03) avec le boîtier de rétroviseur intérieur (02) existe sur le revêtement opaque (13) du substrat de verre (06), et le revêtement opaque (13) dissimule au conducteur la liaison de matériaux (14), en regardant à travers le substrat de verre (06) du verre de rétroviseur (03).

2. Tête de rétroviseur selon la revendication 1, **caractérisée en ce que** la première partie (12) et la seconde partie (15) sont identiques.

3. Tête de rétroviseur selon la revendication 1, **caractérisée en ce que** la seconde partie (15) comporte au moins une partie du côté arrière (10) du verre de rétroviseur (03) munie du revêtement réflecteur (08), dans laquelle le revêtement opaque (13) recouvre une partie du revêtement réflecteur (08) appliqué sur le côté arrière (07) du substrat de verre (06), de sorte que le revêtement réflecteur (08) est agencé dans la zone de la seconde partie (15) entre le substrat de verre (06) et le revêtement opaque (13).

4. Tête de rétroviseur selon la revendication 1 ou 3, **caractérisée en ce que** la seconde partie (15) comprend tout le côté arrière (10) du verre de rétroviseur (03), dans laquelle le revêtement opaque (13) recouvre le revêtement réflecteur (08) appliqué sur le côté arrière (07) du substrat de verre (06), de sorte que le revêtement réflecteur (08) est enserré entre le substrat de verre (06) et le revêtement opaque (13).

5. Tête de rétroviseur selon la revendication 2, 3 or 4, **caractérisée en ce que** la seconde partie (15) comporte au moins un côté étroit (18) du verre de rétroviseur (03) au voisinage du côté arrière (10), et qui est relié au côté avant (16) faisant face au conducteur, dans laquelle le revêtement opaque (13) recouvre au moins le côté étroit (18) du verre de rétroviseur (03) au voisinage du côté arrière (10), et qui est relié au côté avant (16) faisant face au conducteur.

6. Tête de rétroviseur selon l'une quelconque des revendications précédentes, **caractérisée en ce que** la tête de rétroviseur (01) est réalisée sans ossature, dans laquelle le verre de rétroviseur (03) est fixé par liaison de matériaux avec le au moins un bord (09) sur au moins un côté frontal (17) faisant face au conducteur d'au moins une paroi (11) du boîtier de rétroviseur intérieur (02) délimitant l'ouverture (04), et s'étend librement en ayant au moins un côté étroit (18) du verre de rétroviseur (03) au voisinage du côté arrière (10), et qui est relié au côté avant (16) faisant face au conducteur.

7. Tête de rétroviseur selon l'une quelconque des revendications 1 à 5, **caractérisée en ce que** la tête de rétroviseur (01) est réalisée avec une ossature (19), dans laquelle le verre de rétroviseur (03) est fixé par liaison de matériaux avec le au moins un bord (09) sur au moins un épaulement (20) faisant face au conducteur d'au moins une paroi (11) du boîtier de rétroviseur intérieur (02) délimitant l'ouverture (04), et au moins une partie (21) de la paroi (11) surpassant le au moins un épaulement (20) recouvre au moins un côté étroit (18) du verre de rétroviseur (03) au voisinage du côté arrière (10), et qui est relié au côté avant (16) faisant face au conducteur.

8. Tête de rétroviseur selon la revendication 7, **caractérisée en ce que** la au moins une partie de la au moins une paroi surpassant le au moins un épaulement est reliée par liaison de matériaux au au moins un côté étroit du verre de rétroviseur au voisinage du côté arrière, et qui est relié au côté avant faisant face au conducteur.

9. Tête de rétroviseur selon l'une quelconque des revendications précédentes, **caractérisée en ce que** le revêtement opaque (13), en regardant au moins à travers le substrat de verre (06) du verre de rétroviseur (03), présente une impression de couleur sombre.

10. Tête de rétroviseur selon l'une quelconque des revendications précédentes, **caractérisée en ce que** la liaison de matériaux (14) est constituée d'une liaison adhésive et/ou d'une liaison par soudage.

11. Tête de rétroviseur selon l'une quelconque des revendications précédentes, **caractérisée par**, au moins sur le côté arrière (07) du substrat de verre (06), une zone libre (22) réalisée exempte du revêtement opaque (13).

12. Tête de rétroviseur selon la revendication 11, **caractérisée par** au moins une zone libre (22), qui est de plus exempte du revêtement réflecteur (08).

13. Tête de rétroviseur selon l'une quelconque des revendications précédentes, **caractérisée en ce que** le substrat de verre (06) du verre de rétroviseur (03) est constitué d'un verre minéral clair et transparent.

14. Tête de rétroviseur selon l'une quelconque des revendications 1 à 12, **caractérisée en ce que** le substrat de verre (06) du verre de rétroviseur (03) est constitué d'une matière plastique claire et transparente.

15. Tête de rétroviseur selon l'une quelconque des revendications précédentes, **caractérisée en ce que** le verre de rétroviseur (03) est réalisée sous la forme d'un coin de verre et/ou d'un verre de rétroviseur traité contre les éblouissements de manière électrochromatique.
